# FASCICULE DE BREVET EUROPEEN

(11) **EP 0 793 011 B1**
(45) Date de publication et mention de la délivrance du brevet: **18.04.2001**
(21) Numéro de dépôt: 97400336.0
(22) Date de dépôt: 14.02.1997
(51) Int. Cl.: F02K 7/10

(54) **Statoréacteur à géométrie évolutive pour aéronef**
Staustrahltriebwerk mit variabler Geometrie
Ramjet with variable geometry

(30) Priorité: 01.03.1996 FR 9602603
(43) Date de publication de la demande: 03.09.1997
(73) Titulaire: AEROSPATIALE MATRA, 75016 Paris (FR)
(72) Inventeur: Chevalier, Alain, 18000 Asnieres-Les-Bourges (FR); Bouchez, Marc, 18000 Bourges (FR)
(74) Mandataire: Bonnetat, Christian

(56) Documents cités:
- FR-A- 1 110 011
- GB-A- 2 222 635
- US-A- 3 143 852
- US-A- 3 279 194
- US-A- 3 432 100

## Description

La présente invention concerne un statoréacteur pour aéronef à vol supersonique et/ou hypersonique, destiné à fonctionner sur une large plage de vitesses qui, exprimée en nombres de Mach, peut être par exemple comprise entre 1-2 et 15-20.

On connaît déjà par la demande de brevet français 95 08417 un statoréacteur permettant de fonctionner dans une telle plage de vitesses, tout en conservant une efficacité maximale. Pour cela, il comprend :
- une entrée de comburant ;
- un dispositif d'injection de combustible ; et
- un corps de statoréacteur qui, d'une part, comprend une chambre de combustion dans laquelle est effectué le mélange comburant-combustible à brûler, et une tuyère d'échappement pour canaliser les gaz sortant de la chambre de combustion et qui, d'autre part, présente, au moins dans une zone de transition entre la chambre de combustion et la tuyère d'échappement, une géométrie évolutive permettant de passer progressivement d'une section longitudinale convergente puis divergente pour des vitesses correspondant à un nombre de Mach faible, à une section longitudinale approximativement constante puis divergente pour des vitesses correspondant à un nombre de Mach élevé.

Une telle géométrie évolutive de la section longitudinale du corps est obtenue, dans la réalisation décrite dans cette demande de brevet, par l'agencement de l'une des parois latérales du corps, sous la forme de plaques articulées entre elles autour d'axes transversaux à la direction longitudinale du statoréacteur, et situées au moins dans la zone de transition (col de tuyère). Ainsi, en fonction de la vitesse de vol choisie, on peut adapter la géométrie de la section longitudinale du corps, notamment dans la zone de transition, en amenant les plaques progressivement dans la position appropriée, ce qui permet de conserver pour la plage de vitesses indiquée, des conditions de vol optimales, en particulier une valeur de poussée maximale indépendamment des conditions externes (consommation de combustible, pression aérodynamique, profil du flux de comburant dans l'entrée correspondante). En d'autres termes, cela revient notamment à "effacer" le col de tuyère (géométrie convergente-divergente) existant à "faible" vitesse pour en définitive (nombre de Mach égal ou supérieur à environ 7) obtenir une section constante de la chambre de combustion, suivie par la section divergente de la tuyère d'échappement.

Bien que techniquement opérationnelle, cette réalisation de la géométrie évolutive du corps peut être sujette, du point de vue de sa fiabilité dans des conditions extrêmes notamment de température, à des problèmes de bon fonctionnement au niveau des articulations des plaques. Des moyens de soufflage d'air peuvent être alors prévus pour remédier à ces inconvénients. Par ailleurs, l'ensemble de ces plaques articulées et des moyens de soufflage éventuels contribuent à augmenter la masse du statoréacteur, ce qui est préjudiciable.

On connaît également de la demande de brevet français 1 110 011 un étranglement concentrique d'un jet localisé à la buse de sortie d'un statoréacteur au moyen d'une introduction des veines d'air extérieur à travers des ouvertures commandables.

La présente invention a pour objet de proposer un statoréacteur dont la conception de la géométrie évolutive du corps s'affranchit des problèmes exposés ci-dessus.

A cet effet, le statoréacteur du type énoncé préalablement est remarquable, selon l'invention, en ce que ledit corps du statoréacteur comporte au moins une ouverture commandable susceptible d'établir avec l'extérieur une communication avec ladite chambre de combustion, et permettant d'introduire une veine d'air extérieur dans ladite zone de transition. Ainsi, grâce à l'invention, la géométrie évolutive du corps est obtenue par l'introduction de ladite veine d'air extérieur dans la zone de transition du statoréacteur, sans avoir recours à des pièces mécaniques comme dans la précédente réalisation. En effet, cette veine qui forme un écoulement d'air à faible température et à basse pression, permet de modifier, notamment au niveau de la zone de transition (col de tuyère), la section longitudinale de passage du mélange gazeux comburant-combustible à température élevée et à haute pression circulant dans le corps, lorsqu'elle est introduite dans ce dernier. Cette veine diminue ainsi la section de passage du mélange gazeux en la conformant de façon appropriée. En fonction de la vitesse de vol de l'aéronef, on adapte la quantité d'air extérieur admise dans le corps du statoréacteur par l'ouverture commandable, pour conserver des conditions de vol optimales.

De plus, cette solution à géométrie évolutive par veine d'air contribue à diminuer les contraintes thermiques apparaissant au niveau de la tuyère notamment et à réduire la masse du statoréacteur, comparativement à la solution antérieure.

Par exemple, ladite ouverture est ménagée dans une paroi dudit corps, et un volet commandable est articulé, autour d'un axe, à ladite paroi pour obturer ladite ouverture lorsqu'il occupe une position fermée, et permettre le passage de ladite veine d'air extérieur à l'intérieur dudit corps, à travers ladite ouverture, lorsqu'il occupe une quelconque position ouverte.

Généralement, le corps de statoréacteur présente une forme de conduit à section transversale rectangulaire, constitué de parois deux à deux opposées. Dans ce cas, ladite ouverture est prévue dans la paroi inférieure ou intrados dudit corps. La paroi supérieure est alors associée au fuselage de l'aéronef.

En outre, l'axe d'articulation dudit volet est sensiblement orthogonal à la direction longitudinale dudit corps. Dans un premier mode de réalisation, ledit volet commandable peut être articulé par son bord avant à ladite paroi par l'intermédiaire dudit axe, ledit volet pivotant vers l'intérieur dudit corps pour laisser entrer ladite veine d'air extérieur dans ce dernier. Dans un second mode de réalisation, ledit volet commandable est alors articulé par son bord arrière à ladite paroi par l'intermédiaire dudit axe, ledit volet pivotant vers l'extérieur dudit corps pour laisser entrer ladite veine d'air extérieur dans ce dernier.

Par ailleurs, deux ouvertures commandables peuvent être ménagées dans ledit corps, une première communiquant avec ladite chambre de combustion, et une seconde communiquant avec ladite zone de transition. Des volets commandent lesdites ouvertures et sont articulés sur une paroi dudit corps autour d'axes respectifs. Ainsi, la seconde ouverture peut être utilisée pour amener une veine d'air dans la zone de transition pour des nombres de Mach faibles. Et la première ouverture est utilisée pour des nombres de Mach plus élevés afin de conformer, de façon appropriée, la géométrie de la section longitudinale dudit corps.

Les figures du dessin annexé feront bien comprendre comment l'invention peut être réalisée. Sur ces figures, des références identiques désignent des éléments semblables.

La figure 1 illustre schématiquement un aéronef équipé d'un statoréacteur conforme à l'invention.

La figure 2 représente, en coupe longitudinale schématique, un exemple de réalisation dudit statoréacteur à géométrie évolutive de l'invention.

La figure 3 montre, en coupe longitudinale schématique, une variante de réalisation dudit statoréacteur.

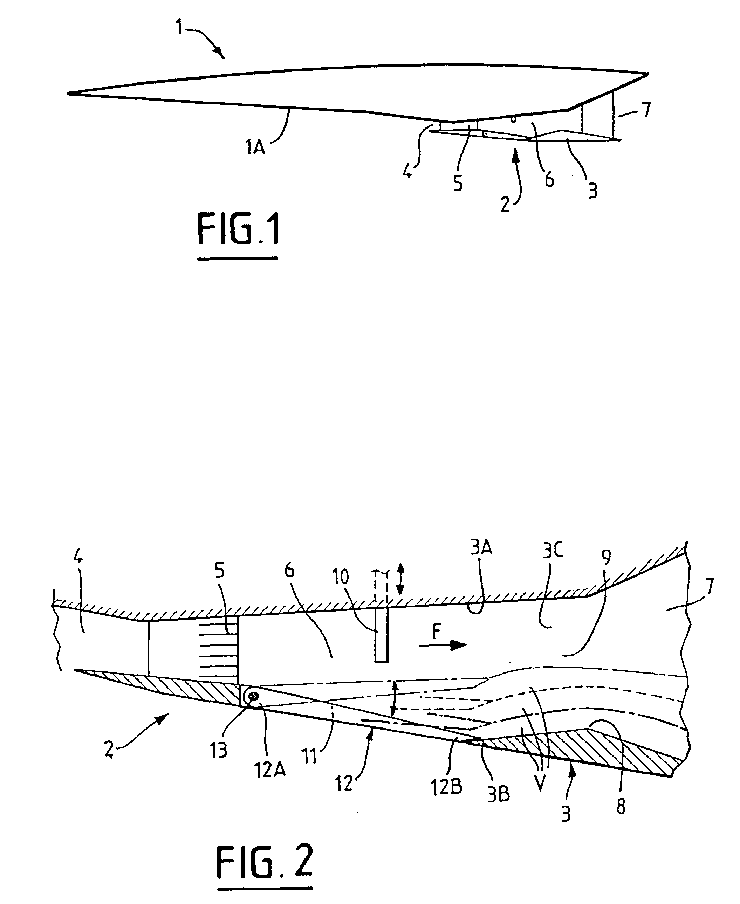

L'aéronef 1 montré sur la figure 1 est équipé, sous son fuselage 1A dans cet exemple de réalisation, d'un statoréacteur à géométrie évolutive, lui permettant de voler dans une large plage de vitesses comprise entre des nombres de Mach de 1-2 à 15-20.

Le statoréacteur 2 comprend principalement un corps de structure 3, une entrée de comburant 4, un dispositif d'injection de combustible 5, une chambre à combustion 6 et une tuyère d'échappement 7. En particulier, dans l'exemple représenté sur la figure 2, le corps de structure 3 présente longitudinalement, approximativement une forme de conduit à section transversale rectangulaire ou analogue, constitué de parois deux à deux opposées. Dans l'exemple illustré, la paroi supérieure 3A est associée au fuselage 1A de l'aéronef, tandis que la paroi inférieure 3B constitue l'intrados du statoréacteur. Les deux autres parois latérales 3C sont parallèles au plan des figures.

De l'amont vers l'aval du corps de statoréacteur selon sa direction longitudinale, dans le sens d'écoulement du jet ou mélange gazeux symbolisé par la flèche F, se trouvent l'entrée de comburant 4 notamment une prise d'air, le dispositif d'injection 5 derrière ladite entrée, une chambre de combustion 6 dans laquelle est effectué le mélange comburant-combustible à brûler, et une tuyère d'échappement 7 présentant un col 8 à géométrie convergente-divergente, destinée à canaliser vers l'extérieur le jet gazeux produit par le mélange.

Par ailleurs, le corps 3 du statoréacteur 2 présente une géométrie évolutive au moins dans une zone de transition 9 définie entre une partie de la chambre de combustion 6 et une partie de la tuyère (col) et permettant, comme on l'a précisé préalablement, d'adapter la section longitudinale du corps 3, au moins dans cette zone de transition 9 (col 8), en fonction de la vitesse de vol.

En outre, la chambre de combustion 6 se subdivise en une zone de diffusion amont, où commence la combustion supersonique, et une zone de chambre aval, où se produit la combustion supersonique, derrière des accroche-flammes rétractables 10, et où se termine la combustion supersonique. Le dispositif d'injection 5, constitué d'injecteurs, répartit le combustible dans tout le volume de la chambre. Comme combustible à utiliser en fonction du nombre de Mach souhaité, on se reportera à la demande de brevet français précitée.

Selon l'invention, le corps de structure 3 du statoréacteur 2 est pourvu, dans cet exemple de réalisation montré sur la figure 2, d'une ouverture commandable 11 ménagée, dans ce cas, dans la paroi inférieure 3B du corps et qui est susceptible d'établir avec l'extérieur une communication avec ladite chambre de combustion 6 afin d'introduire, lorsqu'elle est opérationnelle, une veine d'air extérieur dans la zone de transition 9 du corps, s'écoulant dans le même sens F que le jet gazeux. Cette veine d'air V permet alors de faire varier la géométrie de la section longitudinale du corps, notamment au niveau de la zone de transition et de modifier, en conséquence, la section de passage du jet gazeux traversant l'intérieur du corps de structure, comme on le verra ci-après.

En particulier, un volet 12 formant trappe escamotable, obture l'ouverture 11 pour la découvrir progressivement. Ce volet 12 est articulé autour d'un axe 13 sur la paroi inférieure 3B du corps et son pivotement est commandé par un actionneur non représenté mais d'un type connu en soi. Dans cet exemple, l'axe d'articulation 13 qui est orthogonal à la direction longitudinale du statoréacteur, est prévu sur le bord avant 12A du volet, tourné vers le dispositif d'injection 5, tandis que son bord arrière 12B est dirigé vers la zone de transition. Bien évidemment, dans la position fermée du volet 12, représentée par un trait continu sur la figure 2, pour laquelle l'ouverture 11 est totalement obturée, le volet 12 prolonge la paroi 3B sans discontinuité, et fait ainsi office de partie de paroi.

A cette position fermée du volet 12 (en trait continu), correspond une vitesse de vol comprise dans la plage de Mach 1-2 pour laquelle le volume (ou la hauteur) de la chambre de combustion 6 est maximale (section transversale de passage maximale), le statoréacteur 1 se terminant par une tuyère 7 à col ouvert à géométrie convergente-divergente.

Pour une vitesse de vol de l'ordre de 2,5 Mach, le volet 12 occupe, sous l'action de l'actionneur et de l'axe d'articulation 13, la position illustrée par un trait mixte fort sur la figure 2, rentrée vers l'intérieur de la chambre de combustion 6 du corps 3. Le volet 12 découvre l'ouverture 11 qui constitue une prise d'air et à travers laquelle s'introduit une veine d'air extérieur V. Celle-ci, canalisée par le volet 12, s'écoule en direction de la zone de transition 9, en obligeant le jet gazeux issu du mélange comburant-combustible à prendre une configuration de section transversale réduite le long de la section longitudinale depuis le volet 12, qui participe aussi à la configuration de la nouvelle géométrie du jet gazeux, jusqu'à la sortie de la tuyère 7. Dans cette position, la géométrie de la chambre 6 change légèrement, sa section transversale diminuant et celle de la tuyère 7 conserve sensiblement un col 8 convergent-divergent, notamment au niveau de la zone de transition 9. La veine d'air extérieur V, qui est à basse température et basse pression, fait ainsi office de "frontière naturelle" pour varier la géométrie du corps de structure, c'est-à-dire le jet gazeux à température et pression élevées.

Pour une vitesse de vol de 6 Mach par exemple, le volet 12 occupe la position indiquée par un trait interrompu sur la figure 2 ; comme le volet est davantage rentré dans le corps, la section transversale de la chambre de combustion 6 diminue en conséquence pour tendre à être presque constante, tandis que la tuyère 8 conserve une géométrie de col convergente-divergente mais certes plus aplatie, en raison de l'écoulement de la veine d'air V plus importante introduite dans le corps.

En ce qui concerne le fonctionnement des accroche-flammes 10 et du dispositif d'injection de combustible 5 à ces différentes vitesses et autres, on se reportera à ladite demande de brevet français précitée.

Pour une vitesse de vol supérieure à 7 Mach par exemple, le volet 12 occupe la position illustrée par un trait mixte fin, pour laquelle la géométrie de la section longitudinale du corps 3 présente une section transversale sensiblement constante depuis la chambre de combustion 6 jusqu'au col 8 de tuyère 7 qui ne possède plus qu'une géométrie divergente. Le volet 12 est sensiblement parallèle à la paroi supérieure 3A du corps, tandis que l'ouverture 11, alors maximale, laisse entrer une veine d'air V importante dans la zone de transition 9, ladite veine prolongeant le plan du volet 12 en maintenant la section longitudinale constante, jusqu'à diverger légèrement après le col de tuyère. Cette configuration est utilisée avantageusement lorsque les conditions de fonctionnement sont telles que l'apport de chaleur réalisé par la combustion peut se faire en supersonique, sans qu'un phénomène de blocage thermique n'apparaisse dans la section sensiblement constante ainsi créée (c'est ce qui détermine si c'est Mach 7 ou plus ou moins).

Bien qu'une telle géométrie variable du corps de structure 3 dudit statoréacteur, par l'introduction d'une veine d'air, permette d'optimiser les différentes phases de vol de l'aéronef et cela, sur une plage de Mach et de conditions de vol (altitude, incidence, accélération ou croisière) importantes, elle présente également d'autres avantages appréciables.

En effet, cette veine d'air supplémentaire constitue un apport de quantité de mouvement, augmentant le débit dans le corps, ce qui peut être profitable à la poussée du statoréacteur sans augmenter nécessairement la consommation. De plus, la traînée du statoréacteur diminue si bien que le frottement, qui a une influence importante sur les performances en fonction que le nombre de Mach augmente, diminue sur la paroi inférieure du corps de structure. Par ailleurs, la partie inférieure ou basse de la tuyère est avantageusement refroidie par l'écoulement de la veine d'air à basse température, de sorte que seule la paroi supérieure subit des flux thermiques intenses. On peut également noter que la dilution du jet gazeux obtenue en sortie de tuyère peut être bénéfique du point de vue de la signature radar qui est réduite.

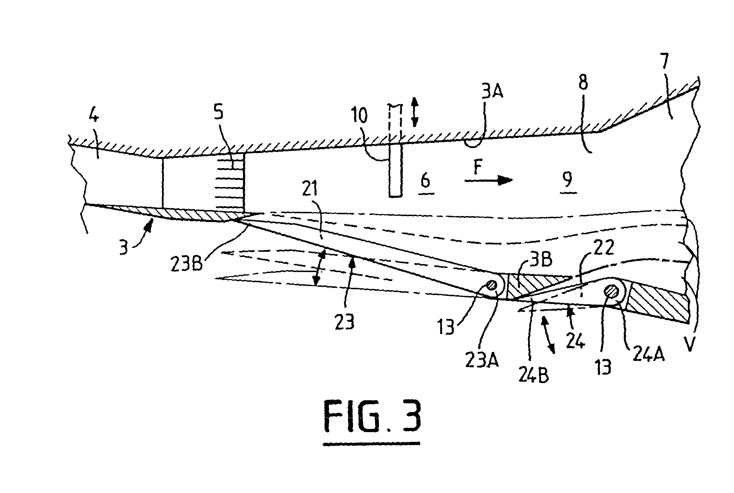

Dans la variante de réalisation montrée sur la figure 3, la géométrie évolutive du corps de structure 3 est obtenue par deux ouvertures 21, 22 ménagées en série dans la paroi inférieure 3B du corps et obturables par des volets commandables, respectivement 23 et 24. Plus particulièrement, la première ouverture 21 communique avec la chambre de combustion 6, tandis que la seconde ouverture 22 débouche directement dans la zone de transition 9 au niveau du col 8 de tuyère 7, dans la partie convergente de sa géométrie.

Contrairement à la réalisation précédente, le volet 23 de la première ouverture 21 est articulé par son bord arrière 23A à la paroi inférieure 3B autour d'un axe d'articulation 13, de sorte que son bord avant 23B pivote pour découvrir progressivement la première ouverture 21. Il en va de même pour le volet 24 de la seconde ouverture, articulé par son bord arrière 24A à la paroi du col de tuyère, autour d'un axe 13. Les deux volets sont là aussi commandés par des actionneurs non représentés et les axes d'articulation 13 sont parallèles entre eux et orthogonaux à la direction longitudinale du statoréacteur.

Le fonctionnement de cette variante de réalisation est semblable à celui décrit en regard de la figure 2.

Pour des vitesses de vol de l'ordre de 2,5 Mach, seul le volet 24 est actionné permettant de découvrir, de façon appropriée pour cette vitesse, la seconde ouverture 22 et de faire pénétrer une veine d'air extérieur V représentée par un trait mixte fort, directement dans le col 8 de tuyère 7, de façon à modifier, à cet endroit de la zone de transition 9, le jet gazeux issu de la combustion. Le volet 23 obture quant à lui la première ouverture 21.

Pour des vitesses de vol de l'ordre de 6 Mach et supérieures à 7 Mach par exemple, le volet 23 est commandé pour s'ouvrir respectivement selon les positions illustrées par un trait interrompu et par un trait mixte fin, et laisser entrer par l'ouverture 21, une veine d'air extérieur correspondante qui parcourt la chambre de combustion 6, la zone de transition 9 et sort par la tuyère 7. Pour une vitesse de vol d'au moins 7 Mach, la géométrie évolutive du corps 3 est sensiblement constante jusqu'au niveau du col 8 de tuyère 7 pour légèrement diverger ensuite. Plus la vitesse augmente, plus le volume de la chambre de combustion et de la zone de transition diminue jusqu'à occuper un volume minimal pour des nombres de Mach supérieurs à 7 par exemple.

## Revendications

1. Statoréacteur pour aéronef à vol supersonique et/ou hypersonique, destiné à fonctionner sur une large plage de vitesses, du type comportant :
- une entrée (4) de comburant ;
- un dispositif d'injection (5) de combustible ; et
- un corps (3) de statoréacteur qui, d'une part, comprend une chambre de combustion (6) dans laquelle est effectué le mélange comburant-combustible à brûler, et une tuyère d'échappement (7) pour canaliser les gaz sortant de la chambre de combustion et qui, d'autre part, présente, au moins dans une zone de transition (9) entre la chambre de combustion et la tuyère d'échappement, une géométrie évolutive permettant de passer progressivement d'une section longitudinale convergente puis divergente pour des vitesses correspondant à un nombre de Mach faible, à une section longitudinale approximativement constante puis divergente pour des vitesses correspondant à un nombre de Mach élevé,
caractérisé en ce que ledit corps (3) du statoréacteur comporte au moins une ouverture commandable (11) susceptible d'établir avec l'extérieur une communication avec ladite chambre de combustion et d'introduire une veine d'air extérieur dans ladite zone de transition (9) pour engendrer ladite géométrie évolutive.

2. Statoréacteur selon la revendication 1,
caractérisé en ce que ladite ouverture (11, 21, 22) est ménagée dans une paroi dudit corps (3), et en ce qu'un volet commandable (12, 23, 24) est articulé, autour d'un axe, à ladite paroi pour obturer ladite ouverture lorsqu'il occupe une position fermée, et permettre le passage de ladite veine d'air extérieur à l'intérieur dudit corps, à travers ladite ouverture, lorsqu'il occupe une quelconque position ouverte.

3. Statoréacteur selon la revendication précédente, du type dans lequel ledit corps présente une forme générale de conduit de section transversale rectangulaire, constitué de parois deux à deux opposées,
caractérisé en ce que ladite ouverture (11) est prévue dans la paroi inférieure ou intrados (3B) - en direction de vol normal - dudit corps.

4. Statoréacteur selon l'une des revendications 2 et 3,
caractérisé en ce que l'axe d'articulation (13) dudit volet est sensiblement orthogonal à la direction longitudinale dudit corps (3).

5. Statoréacteur selon l'une des revendications 2 à 4,
caractérisé en ce que ledit volet commandable (12) est articulé par son bord amont (12A) à ladite paroi par l'intermédiaire dudit axe, ledit volet pivotant vers l'intérieur dudit corps pour laisser entrer ladite veine d'air extérieur dans ce dernier.

6. Statoréacteur selon l'une des revendications 2 à 4,
caractérisé en ce que ledit volet commandable (23, 24) est articulé par son bord aval (23A, 24A) à ladite paroi par l'intermédiaire dudit axe, ledit volet pivotant vers l'extérieur dudit corps pour laisser entrer ladite veine d'air extérieur dans ce dernier.

7. Statoréacteur selon l'une des revendications précédentes,
caractérisé en ce que deux ouvertures commandables (21, 22) sont ménagées dans ledit corps (3), une première (21) communiquant avec ladite chambre de combustion (6), et une seconde (22) communiquant avec ladite zone de transition (9).

8. Statoréacteur selon la revendication précédente,
caractérisé en ce que des volets (23, 24) commandent lesdites ouvertures et sont articulés sur une paroi (3B) dudit corps autour d'axes respectifs (13).

## Patentansprüche

1. Staustrahltriebwerk für Über- und/oder Hyperschallflugzeug, das in einem großen Geschwindigkeitsbereich eingesetzt werden soll und folgendes umfaßt:
- einen Sauerstoffträgereinlauf (4),
- eine Brennstoffeinspritzvorrichtung (5) und
- einen Staustrahltriebwerkkörper (3), der einerseits eine Brennkammer (6), in der das Sauerstoffträger-Brennstoff-Gemisch hergestellt wird, das verbrannt werden soll, und eine Auspuffdüse (7) zum Kanalisieren der aus der Brennkammer austretenden Gase umfaßt, und der andererseits in mindestens einem Übergangsbereich (9) zwischen der Brennkammer und der Auspuffdüse eine veränderliche Geometrie besitzt, die es ermöglicht, allmählich von einem konvergierenden und dann divergierenden Längsabschnitt für einer niedrigen Machzahl entsprechende Geschwindigkeiten in einen annähernd konstanten, dann divergierenden Längsabschnitt für einer hohen Machzahl entsprechende Geschwindigkeiten überzugehen,
dadurch gekennzeichnet, daß der Körper (3) des Staustrahltriebwerks mindestens eine steuerbare Öffnung (11) besitzt, die eine Verbindung zwischen der Freiluft und der genannten Brennkammer herstellen und einen Strahl Außenluft in den genannten Übergangsbereich (9) einleiten kann, um die genannte veränderliche Geometrie zu schaffen.

2. Staustrahltriebwerk nach Anspruch 1, dadurch gekennzeichnet, daß die genannte Öffnung (11, 21, 22) in einer Wand des genannten Körpers (3) angebracht ist, und dadurch, daß eine steuerbare Klappe (12, 23, 24) schwenkbar um eine Achse in der genannten Wand angebracht ist, um die genannte Öffnung zu verschließen, wenn sich die Klappe in geschlossener Stellung befindet, und das Einströmen des genannten Außenluftstrahls über die genannte Öffnung ins Innere des genannten Körpers zu ermöglichen, wenn sie eine beliebige geöffnete Stellung einnimmt.

3. Staustrahltriebwerk nach dem vorhergehenden Anspruch, in dem der genannte Körper eine allgemeine Form einer Rohrleitung mit rechtwinkligem Querschnitt besitzt, die aus jeweils zwei sich gegenüberliegenden Wänden besteht,
dadurch gekennzeichnet, daß die genannte Öffnung (11) in der unteren oder Leibungswand (3B) in normaler Flugrichtung des genannten Körpers vorgesehen ist.

4. Staustrahltriebwerk nach einem der Ansprüche 2 und 3, dadurch gekennzeichnet, daß die Schwenkachse (13) der genannten Klappe im wesentlichen rechtwinklig zur Längsrichtung des genannten Körpers (3) liegt.

5. Staustrahltriebwerk nach einem der Ansprüche 2 bis 4, dadurch gekennzeichnet, daß die genannte steuerbare Klappe (12) mit ihrer Vorderkante (12A) mittels der genannten Achse an der genannten Wand schwenkbar gelagert ist, wobei die genannte Klappe in das Innere des genannten Körpers schwenkt, um den genannten Außenluftstrahl in diesen einströmen zu lassen.

6. Staustrahltriebwerk nach einem der Ansprüche 2 bis 4, dadurch gekennzeichnet, daß die genannte steuerbare Klappe (23, 24) mit ihrer Hinterkante (23A, 24A) mittels der genannten Achse an der genannten Wand schwenkbar gelagert ist, wobei die genannte Klappe in bezug auf den genannten Körper nach außen schwenkt, um den genannten Außenluftstrahl in diesen einströmen zu lassen.

7. Staustrahltriebwerk nach einem der vorhergehenden Ansprüche, dadurch gekennzeichnet, daß zwei steuerbare Öffnungen (21, 22) im genannten Körper (3) angebracht sind, wobei eine erste (21) mit der genannten Brennkammer (6) und eine zweite (22) mit dem genannten Übergangsbereich (9) Verbindung steht.

8. Staustrahltriebwerk nach dem vorhergehenden Anspruch, dadurch gekennzeichnet, daß Klappen (23, 24) die genannten Öffnungen steuern und schwenkbar um entsprechende Achsen (13) an einer Wand (3B) des genannten Körpers gelagert sind.

## Claims

1. A ramjet for supersonic and/or hypersonic aircraft, designed to operate over a wide range of speeds, comprising:
- an inlet (4) for a combustion supporting gas;
- a fuel injection device (5); and
- a ramjet body (3) which comprises a combustion chamber (6) in which said combustion supporting gas is mixed with a fuel to be burned and an exhaust nozzle (7) to channel the gases leaving said combustion chamber and which has, at least in a transition area (9) between said combustion chamber and said exhaust nozzle, a variable geometry progressively varying from a convergent then divergent longitudinal section for speeds corresponding to a low Mach number to an approximately constant and then divergent longitudinal section for speeds corresponding to a high Mach number,
characterized in that said ramjet body (3) comprises at least one controllable opening (11) adapted to establish communication between said combustion chamber and the exterior and to introduce of an exterior air stream into said transition area (9) so as to generate said variable geometry.

2. The ramjet claimed in claim 1 characterized in that said opening (11, 21, 22) is formed in a wall of said body (3) and in that a controllable flap (12, 23, 24) is hinged to said wall about an axis to close off said opening when it occupies a closed position and to enable said exterior air stream to flow into the interior of said body through said opening when it occupies any open position.

3. The ramjet claimed in the preceding claim of the type in which said body has the general shape of a rectangular cross-section duct made up of opposite pairs of walls, characterized in that said opening (11) is provided in the bottom wall or intrados (3B) in the normal flight direction of said body.

4. The ramjet claimed in either of claims 2 and 3 characterized in that the hinge axis (13) of said flap is substantially orthogonal to the longitudinal direction of said body (3).

5. The ramjet claimed in any one of claims 2 to 4 characterized in that said controllable flap (12) is hinged to said wall about said axis at its upstream edge and pivots towards the interior of said body to allow said exterior air stream to enter thereinto.

6. The ramjet claimed in any one of claims 2 to 4 characterized in that said controllable flap (23, 24) is hinged to said wall about said axis at its downstream edge (23A, 24A) and pivots towards the exterior of said body to allow said exterior air stream to enter thereinto.

7. The ramjet claimed in any one of the preceding claims characterized in that two controllable openings (21, 22) are formed in said body (3) , a first (21) of them communicating with said combustion chamber (6) and a second (22) of them communicating with said transition area (9).

8. The ramjet claimed in the preceding claim characterized in that flaps (23, 24) control said openings and are hinged to a wall (3B) of said body about respective axes (13).
